# EUROPÄISCHE PATENTSCHRIFT

(11) **EP 2 697 234 B1**
(45) Veröffentlichungstag und Bekanntmachung des Hinweises auf die Patenterteilung: **12.08.2015**
(21) Anmeldenummer: 12705878.2
(22) Anmeldetag: 27.02.2012
(51) Int. Cl.: C07F 7/18, C09K 3/18, B01J 19/18

(54) **LÖSUNG UMFASSEND ORGANOFUNKTIONELLE ALKALI-SILICONATE, SILICATE SOWIE VERFAHREN ZU DEREN HERSTELLUNG**
SOLUTION COMPRISING ORGANOFUNCTIONAL ALKALINE SILICONATES, SILICATES AND METHOD FOR THE PRODUCTION THEREOF
SOLUTION CONTENANT DES SILICATES ET DES SILICONATES ALCALINS À GROUPE(S) ORGANIQUE(S), ET PROCÉDÉ DE PRODUCTION DE CETTE SOLUTION

(30) Priorität: 11.04.2011 DE 102011007137
(43) Veröffentlichungstag der Anmeldung: 19.02.2014
(73) Patentinhaber: Evonik Degussa GmbH, 45128 Essen (DE)
(72) Erfinder: FRIEDEL, Manuel, CH-8048 Zürich (CH); LJESIC, Spomenko, 79618 Rheinfelden (DE); WASSMER, Christian, 79688 Hausen (DE); ZÖLITZ, Susanne, 79618 Rheinfelden (DE)
(86) Internationale Anmeldenummer: PCT/EP2012/053263
(87) Internationale Veröffentlichungsnummer: WO 2012/139803

(56) Entgegenhaltungen:
- WO-A2-02/083808
- JP-A- 49 014 535
- US-A- 4 252 569

## Beschreibung

Die Erfindung betrifft ein Verfahren zur Herstellung einer Lösung umfassend organofunktionelle Alkali-Siliconate, Silikate und gegebenenfalls deren Co-Kondensationsprodukte sowie die Lösungen selbst und eine Anlage zur deren Herstellung.

Aufgrund der Wasseraufnahme von porösen, mineralischen Baustoffen, wie Beton, Sandsteinen, Kalksandsteinen, Gips, Keramiken oder gebrannten Tonerzeugnissen, bspw. Mauerziegel, in Gegenwart von Wasser oder Feuchte können die Baustoffe geschädigt werden. Eine Instandsetzung von derart geschädigten Baustoffen ist sehr aufwendig und kostenintensiv. Bekannt ist es, hydrophobierende Mittel auf die Oberfläche oder in die Masse bei der Herstellung solcher Baustoffe einzutragen, um die Wasseraufnahme und damit die Schädigung der Baustoffe zu verhindern. Seit einiger Zeit spielen Siliconate als Hydrophobierungsmittel dabei eine wichtige Rolle, insbesondere wenn weniger alkalische Baustoffe, wie Tonerzeugnisse, behandelt werden sollen.

EP 0 650 968 offenbart einen zweistufigen Prozess zur kontinuierlichen Herstellung von Alkalialkylsiliconaten aus Alkyltrichlorsilanen über Alkyltrialkoxysilane. US 4 281 147 beschreibt ein Verfahren zur Herstellung von wässrigen Alkaliorganylsiliconaten durch Reaktion von Organylalkoxypolysiloxanen mit NaOH oder KOH. EP 15366 betrifft ein Verfahren zur Herstellung von Alkalichlorid-freien Alkalimethylsiliconaten durch Umsetzung von Alkalitrichlorsilanen mit einer Base, Fällung der Zwischenstufe durch Ansäuern und abschließendes Auflösen des gewaschenen Filterkuchens in Base. DE 3 220 393 beschreibt Guanidiniumorganylsiliconate und -silicate sowie ein Verfahren zur Herstellung aus Organyltrialkoxysilanen und Guanidiniumhydroxid. US 4 252 569 offenbart ein Verfahren zur Herstellung von Natriummethylsiliconaten durch Umsetzung von Natriummethyltrichlorsilanen mit einer Methanol/Wasser-Mischung in einem ersten Schritt, gefolgt von einer Einleitung der Reaktionsprodukte in wässrige Natriumhydroxid-Lauge. Hauptsächlicher Nachteil des beschriebenen Verfahrens ist die Notwendigkeit einer Phasentrennung nach dem ersten Reaktionsschritt. WO 02/083808 offenbart die hydrophobierende Wirkung von Mischungen von 20 ml Wasser, einer definierten Menge an 28-%igem Kaliummethylsiliconat und/oder technischem Natriumsilicat (Wasserglas) mit 28 % SiO₂, die durch Mischen hergestellt werden und unmittelbar bei 60 °C auf Sand aufgetrocknet werden.

Aus dem Stand der Technik ist weder eine Zusammensetzung umfassend organofunktionelle Alkalisiliconate, Silicate und deren Co-Kondensate bekannt noch ein technisches Verfahren zur industriellen Herstellung einer derartigen Zusammensetzung. Aufgabe der vorliegenden Erfindung ist daher die Bereitstellung eines wirtschaftlichen Verfahrens zur Herstellung von organofunktionelle Alkalisiliconat-Lösungen, enthaltend einen Silicat-Anteil, und optional deren Co-Kondensationsprodukte, mit einer Eignung zur hydrophobierenden Imprägnierung mineralischer Baustoffe, insbesondere von Oberflächen mineralischer Baustoffe und /oder deren Hydrophobierung in der Masse bei ihrer Herstellung. Vorzugsweise werden poröse, mineralische Baustoffe und/oder Untergründe mit den erfindungsgemäßen Lösungen imprägniert. Ebenfalls Aufgabe war die Bereitstellung stabiler Lösungen der Verbindungen, vorzugsweise mit einem hohen Gehalt dieser Verbindungen. Eine weitere Aufgabe bestand in der Bereitstellung einer Anlage zur Durchführung des erfindungsgemäßen Verfahrens.

Gelöst wurde die Aufgabe durch das erfindungsgemäße Verfahren entsprechen den Merkmalen des Anspruchs 1, die erfindungsgemäße Lösung umfassend organofunktionelle Alkalisiliconate, Silicate und gegebenenfalls deren Co-Kondensationsprodukte nach Anspruch 16 und durch die erfindungsgemäße Anlage entsprechend den Merkmalen des Patentanspruchs 18 Weitere Merkmale und deren Kombinationen sind in den Unteransprüchen und detailliert in der Beschreibung erläutert.

Überraschend wurde gefunden, dass es möglich ist, Lösungen von organischen Alkalisiliconate, Silicaten und deren Co-Kondensationsprodukten herzustellen, wenn die Herstellung in Gegenwart von Inertgas erfolgt. Unter einer Lösung wird vorzugsweise eine homogene Mischung verstanden, insbesondere umfassend organofunktionelle Alkalisiliconate, Silicate und gegebenenfalls deren Co-Kondensationsprodukte (zusammen Solute) und mindestens ein Lösemittel, wobei die Solute vorzugsweise vollständig im Lösemittel gelöst sind, d. h. vorzugsweise liegt eine klare Lösung vor.

Überraschenderweise wurde auch gefunden, dass sich Alkylsiliconat-Lösungen mit einem Silicat-Anteil, herstellen lassen, indem Mischungen aus Alkyltrichlorsilanen und Tetrachlorsilan im gewünschten Verhältnis in einem Schritt 1 mit Ethanol oder einer Wasser/Ethanol-Mischung umgesetzt werden. Die erhaltene Mischung, das Reaktionsprodukt, kann im Schritt 2 in eine wässrige Lauge, vorzugsweise eine wässrige NaOH oder KOH Lösung, eingeleitet werden. Dabei ist es bevorzugt, wenn die Lösung so bemessen ist, dass nach Einleitung der Mischung die gewünschte Endkonzentration an Alkylsiliconat und Silicat erhalten wird. Weiter ist es bevorzugt, wenn die Einleitung der Mischung in die Lösung in einer Weise vorgenommen wird, die sicherstellt, dass sich keine festen Ablagerungen bilden, insbesondere silicatischer Art. Dabei kann der Alkohol oder eine Wasser/Alkohol-Gemisch zu 1 bis 100 mol-%, insbesondere 10 bis 100 mol-% in Bezug auf die hydrolysierbaren Reste Si-Hal der Verbindungen I und II eingesetzt werden, insbesondere wird als Alkohol Ethanol eingesetzt. Darüber hinaus kann es bevorzugt sein, eine sub-stöchiometrische Menge Alkohol, wie EtOH oder ein Wasser/Alkohol-Gemisch, wie Wasser/EtOH, einzusetzen, insbesondere 5 bis 99 mol-%, bevorzugt 10 bis 95 mol-%, besonders bevorzugt 20 bis 90 mol-%, insbesondere um 80 mol-%, jeweils bezogen auf die molare Menge der hydrolysierbaren Si-Hal Bindungen bzw. hydrolysierbaren Hal-Resten an Silizium-Atomen, vorzugsweise der allgemeinen Formeln I und II.

Überraschenderweise wurde gefunden, dass dies zuverlässig gelingt, wenn die Mischung aus dem Schritt 1, das Reaktionsprodukt, mittels eines kontinuierlichen N₂-Stroms in die vorgelegte wässrige Lauge eingedüst wird, d. h. die Mischung wird unmittelbar in der Lösung verteilt. Dabei ist diese Verteilung der Mischung durch die kombinierte Verwendung von intensivem Rühren und Eindüsen unter Inertgas besonders effizient. Die Bildung von festen silicatischen Partikeln oder Ablagerungen kann besonders gut vermieden werden. Bei Bedarf kann die erhaltene Lösung vom Hydrolysealkohol befreit werden und/oder mit Wasser weiter verdünnt werden. Generell ist die erhaltene alkoholhaltige Lösung gebrauchsfertig und für eine Anwendung geeignet.

Das erfindungsgemäße zweistufige Verfahren zur Herstellung von Lösungen aus Alkylsiliconaten und Silicaten in wässriger Lösung, umfasst einen ersten Reaktionsschritt, in dem eine Mischung aus Alkyldichlor- und/oder -trichlorsilanen und Tetrachlorsilan mit einem Wasser/Ethanol-Gemisch oder reinem Ethanol umgesetzt wird, und das erhaltenen Reaktionsprodukt in einem zweiten Schritt mittels eines Inertgasstromes, insbesondere eines N₂-Gasstromes in eine wässrige Lauge, vorzugsweise eine wässrige Alkalihydroxidlösung, in der Weise eingedüst wird, die die Bildung fester Ablagerungen, insbesondere silicatischer Art, verhindert. Dabei kann es bevorzugt sein, eine sub-stöchiometrische Menge EtOH oder Wasser/EtOH-Gemisch, bezogen auf die molare Menge der hydrolysierbaren Si-Hal Bindungen, zu benutzen

Gegenstand der Erfindung ist ein zweistufiges Verfahren zur Herstellung von Lösungen umfassend organofunktionelle Alkalisiliconate, Silicate und gegebenenfalls deren Co-Kondensationsprodukte sowie optional einen Gehalt an Alkohol, die in Gegenwart eines Inertgases hergestellt werden, insbesondere von Lösungen umfassend Alkali-Propylsiliconate, Silicate und deren Co-Kondensationsprodukte sowie Lösungen erhältlich nach diesem Verfahren.

Ebenfalls Gegenstand der Erfindung ist ein Verfahren zur Herstellung einer Lösung umfassend organofunktionelle Alkali-Siliconate, Silikate und gegebenenfalls deren Co-Kondensationsprodukte, sowie Lösungen erhältlich nach diesem Verfahren, umfassend die Schritte
1) Herstellen einer Mischung umfassend mindestens ein organofunktionelles Silan der allgemeinen Formel I, mindestens ein Halogensilan der Formel II und Alkohol, indem
   - mindestens ein organofunktionelles Silan der allgemeinen Formel I

      (R¹)ₓSiHal_{(y_x)} (I)

      mit R¹ unabhängig ein organofunktioneller Rest, insbesondere ein organofunktioneller Rest, der jeweils unabhängig 1 bis 18 C-Atome umfasst, vorzugsweise jeweils unabhängig ein linearer, verzweigter oder cyclischer Alkyl-Rest mit 1 bis 18 C-Atomen, besser n-Propyl, alternativ mit 6 bis 16 C-Atomen, und mit Hal als hydrolysierbaren Rest, wobei Hal unabhängig Chlor oder Brom, bevorzugt Chlor ist, und mit x gleich 1 oder 2 und mit y = 4, vorzugsweise ist x = 1 und
   - mindestens ein Halogensilan der Formel II

      Si(Hal)₄ (II)

      mit Hal als hydrolysierbarer Rest, wobei Hal unabhängig gleich Chlor oder Brom ist, bevorzugt ist Hal gleich Chlor, und
   - mindestens ein Alkohol und gegebenenfalls Wasser umgesetzt werden, insbesondere ein Alkohol-Wasser-Gemisch, insbesondere umfasst der Alkohol Ethanol, Methanol, Propanol, wie iso-Propanol oder n-Propanol, oder Mischungen mit mindestens zwei der Alkohole;
2) Einleiten der umgesetzten Mischung aus Schritt 1 in Gegenwart von Inertgas, vorzugsweise unter Inertgas, in eine wässrige Alkalihydroxid Lösung, vorzugsweise eine wässrige NaOH und/oder KOH Lösung; wobei das Inertgas im Verfahren so zugeführt wird, dass es die Mischung aus Schritt 1 portionsweise, vorzugsweise tropfenweise, unmittelbar in die wässrige alkalische Lösung einbringt, insbesondere in die Lösung eindüst oder die Mischung aus Schritt 1 in der Lösung verteilt, besonders bevorzugt wird die Mischung aus Schritt 1 in der Lösung homogen verteilt.

Wobei es weiter bevorzugt ist, dass die Mischung in Schritt 1 und/oder die Lösung im Schritt 2 intensiv gerührt werden. Vorzugsweise wird die Mischung im Schritt 1 unter intensivem Rühren hergestellt und wird auch unter intensivem Rühren in Gegenwart eines Inertgases direkt in die Lösung im Schritt 2 eingerührt und verteilt. Bevorzugt können Anker-, Propeller-, Kreuzbacken-, Impeller- und/oder Scheibenrührer eingesetzt werden. Darüber hinaus können vorteilhaft Strömungsstörer eingesetzt werden. Der in Schritt 1 eingesetzte Alkohol wird erfindungsgemäß in der Mischung aus Schritt 1 im zweiten Verfahrensschritt mit in die wässrige Alkalihydroxidlösung eingeleitet. Anders als bei Verfahren des Standes der Technik ist eine Abtrennung nicht notwendig, kann aber optional nach Einleiten in die wässrige Alkalihydroxidlösung erfolgen, z. B. destillativ.

Erfindungsgemäß wird in Schritt 2 eine Lösung umfassend organofuntionelle Alkali-Siliconate, Silicate und gegebenenfalls deren Co-Kondensationsprodukte erhalten, wobei die organofunktionellen-Gruppen des Siliconats unabhängig R¹ wie vorstehend und nachstehend definiert entsprechen. Dabei ist R¹ mit unabhängig n-Propyl, isoPropyl-, n-Butyl, iso-Butyl, n- Hexyl-, n-Octyl, i-Octyl, Cyclohexyl besonders bevorzugt. i-Butyl ist dabei insbesondere ein 2-Methylpropyl und i-Octyl ein 2,3,4-Trimethylpentyl.

Unter Alkalihydroxid werden sowohl Erdalkali- und Alkalihydroxide verstanden. Dies sind insbesondere aber nicht abschließend: Lithiumhydroxid, Natriumhydroxid, Kaliumhydroxid, Magnesiumhydroxid, Calciumhydroxid, Bariumhydroxid, die auch in Mischungen oder zusammen mit anderen alkalischen, wasserlöslichen Salzen oder Verbindungen vorliegen können.

Das Inertgas, kann ein Gas bzw. Trägergas sein, mit der Maßgabe, dass es nicht mit den Edukten oder Produkten eine Reaktion eingehen darf, insbesondere darf es nicht mit der alkalischen Lösung reagieren. Kohlendioxid gilt daher nicht als Inertgas. Das Inertgas umfasst vorzugsweise Stickstoff und/oder Argon und weitere, nicht mit den Mischungen und/oder Lösungen reagierende Gase. Dies sind beispielsweise Propan etc. Generell können also auch Lösungsmittel verdampft werden, wie n-Pentan oder weitere dem Fachmann bekannte verdampfbare Lösungsmittel. Generell sind jedoch nicht brennbare und ökologisch verträgliche Gase bevorzugt.

Der organofunktionelle Rest R¹ der allgemeinen Formel I umfasst jeweils unabhängig ein Rest mit 1 bis 18 C-Atome, insbesondere entspricht er jeweils unabhängig einem linearen, verzweigten oder cyclischen Alkyl-Rest mit 1 bis 18 C-Atomen, einem Alkylen-Rest mit 1 bis 18 C-Atomen, einem Aryl-Rest mit 6, 10, 12 oder 13 C-Atomen oder einem Alkylaryl- oder Arylalkyl-Rest mit 7 bis 18 C-Atomen, bevorzugt ist R¹ ein Alkylrest mit 2 bis 16 C-Atomen, besonders bevorzugt ist R¹ ein Alkylrest mit 3 bis 16 C-Atomen, besser mit 3 bis 5 C-Atomen oder 6 bis 16 C-Atomen. Besonders bevorzugte Reste R¹ sind n-Propyl-, i-Propyl, n-Butyl, i-Butyl oder auch n-Pentyl, wobei nach einer Alternative auch langkettige Alkyl-Gruppen mit 6 bis 16 C-Atomen, wie n-Hexyl-, Cyclohexyl- oder Octyl- bevorzugt sind, wobei in diesem Fall ein gewisser Gehalt an Alkohol in der Lösung zur Lösungsvermittlung der langkettigen Alkyl-Gruppen bevorzugt ist. Die genannten organofunktionellen Reste R¹ bilden dann auch die organofunktionellen Reste in den organofunktionellen Alkali-Siliconaten und deren Co-Kondensaten mit Silicaten.

Bevorzugte organofunktionelle Silane der allgemeinen Formel I sind Alkylhalogensilane, wie ein Alkyltrihalogensilan, Dialkyldihalogensilan, wie vorzugsweise Alkyltrichlorsilan, Dialkyldichlorsilan. Weiter bevorzugt sind Propyltrihalogensilan, Dipropyldihalogensilan, insbesondere Propyltrichlorsilan, Dihexyldichlorsilan, Hexyltrichlorsilan, Cyclohexyltrihalogensilan, wie Cyclohexyltrichlorsilan, Octyltrihalogensilan, wie Octyltrichlorsilan um nur einige zu nennen, wobei der Fachmann auch die entsprechenden bromierten oder gemischt halogenierten Alkylhalogensilane, insbesondere umfassend Chlor und Brom, kennt und einsetzten kann.

Gemäß dem erfindungsgemäßen Verfahren ist es bevorzugt, wenn das organofunktionelle Silan der allgemeinen Formel I und das Halogensilan der Formel II in Schritt 1 in einem molaren Verhältnis von 0,5 : 10 bis 10 : 0,5 zugesetzt werden, insbesondere vorgelegt werden, vorzugsweise im Verhältnis von 1 : 10 bis 10 : 1, wobei ein Verhältnis von etwa 1 : 1 bis 9 :1 besonders bevorzugt ist. Erfindungsgemäß wird ein Verhältnis an Silan der Formel I zu Halogensilan der Formel II von etwa 1 : 1 eingesetzt, insbesondere mit einer Schwankung von plus/minus 0,5.

Dabei ist es alternativ oder zusätzlich zu den vorgenannten Merkmalen bevorzugt, wenn der Alkohol; insbesondere Ethanol, Methanol, Propanol, wie iso-Propanol oder n-Propanol, oder Mischungen mit mindestens zwei der Alkohole; im Schritt 1 im Verhältnis von 1 bis 100 mol-% in Bezug auf die hydrolysierbaren Reste, d. h. in Bezug auf die Summe an Hal (Halogen-Atomen in I und II), insbesondere an Chlor-Atomen, in Mol in den allgemeinen Formeln I und II zugesetzt wird. Liegen also circa 2 mol Chlor-Atome in der Summe in der Mischung umfassend Silane der Formel I und II vor, so werden vorzugsweise etwa 0,2 bis 2 mol Alkohol, wie vorzugsweise Ethanol, zugesetzt. Bevorzugt werden zu einem Alkyltrichlorsilan und Tetrachlorsilan, die im Verhältnis von 10 : 5 bis 10 : 5 vorliegen, 1 bis 100 mol-% Ethanol in Bezug auf die Summe an Chloratomen in Mol, bevorzugt 5 bis 99 mol-%, besonders bevorzugt 10 bis 95 mol-%, ganz besonders bevorzugt 20 bis 90 mol-%, insbesondere um 80 mol-%, zugesetzt.

Ein besonderes Merkmal des Verfahren ist es dabei, dass die Mischung aus Schritt 1 unmittelbar in Schritt 2 in eine wässrige, alkalische Lösung eingeleitet und zu einer Lösung umfassend organofunktionelle Siliconate, Silicate und gegebenenfalls deren Co-Kondensationsprodukte umgesetzt wird, insbesondere wird die Mischung aus Schritt 1 portionsweise, vorzugsweise tropfenweis mittels Inertgas unmittelbar in die Lösung eingedüst oder unmittelbar in der Lösung verteilt, d. h. unterhalb der Oberfläche der Lösung wird die Mischung aus Schritt 1 eingeleitet oder eingedüst, vorzugweise wird sie direkt stark verteilt. Eine besonders effiziente Verteilung der portionsweisen, insbesondere tropfenweise eingeleiteten Lösung wird mit einer Kombination einer pneumatischen Verteilung, d. h. durch das Inertgas, und einer mechanischen Verteilung, wie Rühren, erzielt.

Das Stoffmengenverhältnis an hydrolysierbaren Resten der Mischung aus Schritt 1 zum eingesetzten Alkalihydroxid liegt in der Regel zwischen 1 : 5 bis 5 : 1, vorzugsweise liegt es zwischen 1 : 3 bis 3 : 1, besonders bevorzugt um etwa 1 : 2 bis 2 : 1, oder auch um 1 : 1 mit einer Schwankung von plus/minus 0,5. So können auf etwa 1 mol hydrolysierbare Reste etwa 2 mol Alkalihydroxid eingesetzt werden oder nach einer alternativen Verfahrensführung auch auf etwa 2 mol hydrolysierbare Gruppen etwa 1 mol Alkalihydroxid. Bei der Zugabe zur Alkalihydroxid-Lösung umfassen die hydrolysierbaren Reste die Hal-Reste und/oder die durch Veresterung mit dem Alkohol gebildeten Alkoxygruppen, insbesondere an den Silanen der allgemeinen Formeln I und/oder II als auch gegebenenfalls an den gebildeten organofunktionellen Alkalisiliconaten, Silicaten und gegebenenfalls gebildeten Co-Kondensationsprodukten dieser.

Der Alkohol in der Lösung; insbesondere Ethanol, Methanol, Propanol, wie iso-Propanol oder n-Propanol, oder Mischungen mit mindestens zwei der Alkohole; wobei die Lösung organofunktionelle Alkali-Siliconate, Silicate und gegebenenfalls deren Co-Kondensationsprodukte umfasst, kann gegebenenfalls entfernt werden. Dies kann vorzugsweise destillativ erfolgen. Bevorzugt ist es nicht notwendig den Alkohol aus der Lösung zu entfernen, denn die Lösung ist unmittelbar gebrauchsfertig und kann bei Bedarf einfach mit Wasser weiter verdünnt werden.

Generell kann die Lösung, insbesondere die Alkohol enthaltende Lösung, direkt bei der Herstellung auf einen Gehalt an organofunktionellen Alkalisiliconaten, Alkalisilicaten und gegebenenfalls deren Co-Kondensationsprodukte von 1 bis 40 Gew.-% und alle dazwischenliegende Werte eingestellt werden - sie ist unmittelbar gebrauchsfertig - vorzugsweise kann sie auf einen Gehalt von 1 bis 30 Gew.-% eingestellt werden, alternativ auf 7 bis 40 Gew.-%, besonders bevorzugt auf 7 bis 30 Gew.-% oder auch um 8 bis 28 Gew.-%. Nach dem erfindungsgemäßen Verfahren ist es folglich möglich hochkonzentrierte Lösungen herzustellen, die auch stabil sind, bevorzugt über 12 Monate. Bei Bedarf kann die Lösung, d. h. eine rein wässrige oder eine alkoholische Lösung, mit Wasser auf einen Gehalt an organofunktionellen Alkalisiliconaten, Alkalisilicaten und gegebenenfalls deren Co-Kondensationsprodukte von 1 bis 40 Gew.-% und auf alle dazwischenliegende Werte verdünnt werden, vorzugsweise auf 1 bis 30 Gew.-%, oder alternativ auf 7 bis 40 Gew.-%, besonders bevorzugt auf 7 bis 30 Gew.-% oder auch um 8 bis 28 Gew.-%.

Der Gehalt hängt auch direkt mit dem eingesetzten mineralischen Baustoff und/oder der Art der Anwendung zusammen. So können für die Anwendung auf Oberflächen Lösungen mit einem geringen Gehalt geeignet sein und beispielsweise bei der Hydrophobierung in der Masse Lösungen mit einem hohen Gehalt, insbesondere bei der Hydrophobierung von Gips enthaltenden mineralischen Baustoffen. Ebenfalls können hoch konzentrierte Lösungen bevorzugt sein, wenn bereits Wasser als Anmachwasser bei der Hydrophobierung in der Masse zugesetzt wird. Generell kann der Wirkstoffgehalt auch zwischen 1 bis 10 Gew.-% in der Lösung betragen, oder je nach Anwendung 1 bis 5 Gew.-%, 5 bis 10 Gew.-%, 10 bis 15 Gew.-%, 15 bis 20 Gew.-% oder 20 bis 30 Gew.-% oder auch 30 bis 40 Gew.-%.

Während der Herstellung der Mischung aus organofunktionellem Silan der Formel I, dem Halogensilan der Formel II und Alkohol oder Alkohol/Wasser-Mischung steigt die Temperatur reaktionsbedingt im Schritt 1 an. Verfahrensgemäß sollte die Temperatur im Schritt 1 80 °c nicht übersteigen, besonders bevorzugt soll die Temperatur 60 °C nicht übersteigen, gegebenenfalls wird gekühlt. Auch im Schritt 2 steigt die Temperatur reaktionsbedingt an, sie soll jedoch 80 °C, vorzugsweise 60 °C nicht übersteigen, d. h. gegebenenfalls wird im Schritt 2 gekühlt oder die Mischung aus Schritt 1 wird langsamer, portionsweise in die alkalische Lösung eingeleitet.

Bei der Einleitung der Mischung aus Schritt 1 in die Alkalihydroxid-Lösung können sich die organofunktionellen Alkalisiliconate, wie MO[Si(R¹)ₓY_{((y-2)-x)}O]ₐM der idealisierten Formel III oder MO[Si(R¹)ₓO⁻_{((y-2)-x)}O]ₐM + Mₐ der idealisierten Formel IIIa, Alkalisilicate, wie MO[Si(Y)₂]_{b}OM der idealisierten Formel IV, und gegebenenfalls deren Co-Kondensationsprodukte bilden, insbesondere organofunktionelle Co-Kondensate von Alkalisiliconaten und Alkalisilicaten, die vorzugsweise in Form von organofunktionellen Alkalisiloxanolaten vorliegen und die Alkalisilicate umfassen, wie beispielsweise gemäß der idealisiert dargestellten Formel V M_{O}[Si(R¹)ₓY_{((y-2)-x)}IO]ₐ[Si(Y)₂]_{b}OM oder der idealisiert dargestellten Formel Va M_{O}[Si(R¹)ₓY_{((y-2)-x)}O]ₐ[Si(Y)₂]_{b}Si(R¹)ₓY_{((y-2)-x)}O]ₐOM, wobei Y in den Formeln III, IIIa, IV, V und/oder Va jeweils unabhängig Y = O_{1/2} in einer Siloxan-Bindung oder OM, mit M gleich ein einwertiges Alkaliion, wie Na⁺ oder K⁺; oder ½ Erdalkaliion, wie ½ Ca²⁺,in -ONa, -OK, oder Wasserstoff für-OH, R¹ wie definiert, mit a und b unabhängig voneinander größer gleich 1 und jeweils unabhängig x = 1 oder 2 und y = 4, bevorzugt ist x = 1. Vorzugsweise können a und b größer gleich 2, wie zwischen 2 bis 30 sein. Wobei sowohl die organofunktionellen Alkalisiliconate, die Alkalisilicate und gegebenenfalls die Co-Kondensationsprodukte sowohl lineare, cyclische, verzweigte und/oder raumvernetzte Strukturen aufweisen können, da sie aus di-, tri- und tetrafunktionellen hydrolysierbaren Silanen abgeleitet sind.

Ebenso Gegenstand der Erfindung ist ein Verfahren, in dem die Mischung aus Schritt 1 für die Durchführung von Schritt 2 mittels einer Dosiervorrichtung, die im einfachsten Fall ein Regelorgan aufweist, wie ein Absperrorgan bzw. einen Absperrhahn, gegebenenfalls in Gegenwart von Inertgas, insbesondere einem unter Druck stehendem Inertgas, vorzugsweise oberhalb von 1 bar bis 10 bar, portionsweise, insbesondere tropfenweise, einer Vorrichtung mit Einleitungsmittel zugeführt wird, wobei das Einleitungsmittel vorzugsweise ein Einleitungsrohr oder - Schlauch ist, und die Vorrichtung mit Inertgas, insbesondere im Lumen mit Inertgas, überlagert ist, und das Ende des Einleitungsmittels, insbesondere des Einleitungsrohres oder - schlauches, in die alkalische Lösung eingetaucht ist, oder, dass die Mischung aus Schritt 1 für die Durchführung von Schritt 2 in eine Dosiervorrichtung überführt wird und mit Inertgas überlagert wird, insbesondere mit einem unter Druck stehenden Inertgas, vorzugsweise mit einem Druck von 1 bar bis 10 bar, aus der Dosiervorrichtung wird die Mischung aus Schritt 1 portionsweise, insbesondere tropfenweise, in eine Vorrichtung mit Einleitungsmittel gegeben, insbesondere ist das Einleitungsmittel ein Einleitungsrohr oder - Schlauch, wobei die Vorrichtung mit Inertgas überlagert ist, und das Ende des Einleitungsmittels, insbesondere des Einleitungsrohres oder-schlauches, in die alkalische Lösung eingetaucht ist. Ebenso kann es noch zweckmäßig sein, wenn das Ende des Einleitungsmittelsknapp unter der Oberfläche eingetaucht ist, besonders bevorzugt ist es möglichst tief in die Lösung eintaucht.

Dabei ist es weiter bevorzugt, wenn das Verfahren so durchgeführt wird, dass ein Inertgasstrom, beispielsweise ein Stickstoff- und/oder Argonstrom, geteilt wird und ein Teil des Inertgases in die Dosiervorrichtung, insbesondere über die Gaszuleitung, und ein Teil des Inertgases in die Vorrichtung mit Einleitungsmittel, insbesondere über die Gaszuleitung, überführt wird. Vorzugsweise ist das Einleitungsmittel ein Einleitungsrohr und/oder -schlauch. Vorzugsweise ist der Inertgasstrom an den beiden genannten Gaszuleitungen gekoppelt, um die Dosierung und die Verfahrensführung wirtschaftlich zu gestalten.

Zusätzlich oder alternativ zu einem oder mehreren vorgenannten Merkmalen ist es weiter bevorzugt, wenn die Mischung aus Schritt 1 mittels der Dosiervorrichtung portionsweise in die Vorrichtung mit Einleitungsmittel überführt wird, d. h. vorzugsweise in das Einleitungsrohr, und dort mittels des Inertgases durch das Einleitungsmittel, insbesondere Einleitungsrohr, in die alkalische Lösung gedrückt wird, vorzugsweise wird die Mischung aus Schritt 1 jeweils tropfenweise unmittelbar in die Lösung gedrückt, besonders vorzugsweise wird die Mischung aus Schritt 1 durch das Inertgas unmittelbar in die Lösung eingedüst, weiter bevorzugt wird die Mischung aus Schritt 1 durch das Inertgas unter Druck in die Lösung eingedüst. Dabei sind die Tropfen bevorzugt jeweils durch das Inertgas voneinander separiert. Zusätzlich kann die Verteilung und Verdünnung der Mischung 1 aus Schritt 1 am Ende des Einleitungsmittels in der wässrigen Alkalihydoxid-Lösung durch intensives Rühren weiter unterstützt werden.

Ebenfalls Gegenstand der Erfindung ist eine Lösung erhältlich nach dem erfindungsgemäßen Verfahren, die einen definierten Alkoholgehalt aufweist und/oder die vorzugsweise Co-Kondensationsprodukte von organofunktionellen Alkalisiliconaten mit Silicaten aufweist. Der Alkohol-Gehalt der Lösung kann vorzugsweise zwischen 1 Gew.-ppm und 25 Gew.-% betragen, bevorzugt zwischen 10 Gew.-ppm und 20 Gew.-%, besonders bevorzugt zwischen 100 Gew.-ppm und 10 Gew.-%, ganz besonders bevorzugt zwischen 0,1 Gew.-% und 5 Gew.-%, jeweils bezogen auf das Gesamtgewicht der Lösung. Höhere Mengen an Alkohol können die Solubilisierung von längerkettigen organofunktionellen Resten R¹ unterstützen, niedrigere Mengen an Alkohol können einen höheren Flammpunkt der Lösung bedingen.

Bevorzugte Alkoholgehalten in der Lösung umfassend organofunktionelle Alkalisiliconate, Silikate und gegebenenfalls deren Co-Kondensationsprodukte können im Bereich von 10 Gew.-ppm und 20 Gew.-%, besonders bevorzugt zwischen 100 Gew.-ppm und 10 Gew.-%, ganz besonders bevorzugt zwischen 0,1 Gew% und 5 Gew.-%, jeweils bezogen auf das Gesamtgewicht der Lösung, liegen. Dabei kann der Alkoholgehalt vor der Verarbeitung auch durch Zugabe von Wasser weiter gesenkt werden. Eine erfindungsgemäße Lösung kann optional freie Chloride und optional freien Alkohol umfassen, wobei aber die organofunktionellen Alkalisiliconate und Alkalisilicate im Wesentlichen frei von Halogeniden, wie Chloriden, sind und auch im Wesentlichen frei von Alkoxygruppen sind. Entsprechendes gilt für gegebenenfalls erhaltene Co-Kondensationsprodukte.

Ein weiterer Gegenstand der Erfindung ist die Verwendung einer erfindungsgemäßen Lösung oder einer Lösung, die nach dem erfindungsgemäßen Verfahren hergestellt wurde zur Hydrophobierung von mineralischen Baustoffen, insbesondere einer Lösung mit einem Gehalt an Alkohol, vorzugsweise zur Hydrophobierung der Oberfläche mineralischer Baustoffe oder zur Hydrophobierung von mineralischen Baustoffen in der Masse. Dabei kann die Verwendung der Lösung zur Hydrophobierung eines Teils des mineralischen Baustoffes oder auch zur Hydrophobierung des gesamten mineralischen Baustoffes, jeweils umfassend Beton, Estrich, Putz, Gips, Mörtel, Lehm, Ton, Sand, Keramik, Terracotta, Kalksandstein Naturstein, wie Sandstein, Marmor, Granit sowie Artikel daraus oder Artikel enthaltend diese, wie Formteile, die beispielsweise Rohre, Ziegel, Bodenplatten, Wände, Gartenkübel, Dachziegel sowie weitere übliche, dem Fachmann bekannte mineralische Baustoffe und Artikel aus diesen Baustoffen umfassen.

Ebenfalls Gegenstand der Erfindung ist eine Anlage, insbesondere zur Durchführung eines erfindungsgemäßen Verfahrens, die eine Dosiereinrichtung umfassend ein Regelorgan aufweist, und a) die Dosiereinrichtung umfasst einen ersten Behälter mit einer Gaszuleitung und/oder einer Zuleitung oder b) die Anlage umfasst eine Dosiereinrichtung umfassend ein Regelorgan; einen Reaktor Schritt 1 mit einer Zuleitung für Edukte und gegebenenfalls einer Gaszuleitung für Inertgas, wobei die Dosiereinrichtung mit einer Vorrichtung verbunden ist, die ein Einleitungsmittel, Einleitungsrohr und/oder -schlauch und einen zweiten Behälter aufweist, wobei der zweite Behälter, ein Lumen und eine Gaszuleitung aufweist und mit dem Einleitungsmittel, insbesondere Einleitungsrohr oder -schlauch, verbunden ist, wobei das Einleitungsmittel mit seinem Ende in einen Reaktor Schritt 2 eingeführt ist. Dabei ist es ausreichend, wenn der zweiter Behälter bzw. das Lumen, geeignet ist ein Mischen von Inertgas und der Mischung aus Schritt 1 zu ermöglichen, d. h. der zweite Behälter kann auch eine Art Erweiterung am Einleitungsmittel oder eine Mischkammer sein. Das Einleitungsmittel kann ein Einleitungsrohr, einen Einleitungsschlauch, eine Kapillare oder auch eine Hohlnadel umfassen. Dem Fachmann ist klar, dass das die Vorrichtung mit Einleitungsmittel auch eine Vielzahl an Einleitungsmitteln, beispielsweise 2 bis 100, die gegebenenfalls über Regelorgane angesteuert werden, aufweisen kann.

Weiter kann es bevorzugt sein, wenn in der Anlage die Mischung aus Schritt 1 mit dem Regelorgan, gegebenenfalls aus dem ersten Behälter oder dem Reaktor Schritt 1, definiert in das Lumen des zweiten Behälters überführbar ist, und mittels des über die Gaszuleitung zugeführten Inertgases über das Einleitungsmittel, wobei das Einleitungsmittel vorzugsweise ein Einleitungsrohr oder -schlauch ist, dessen Ende in die Alkalihydroxid-Lösung im Reaktor Schritt 2 eintaucht, in die Lösung einleitbar ist, insbesondere in die Lösung eindüsbar ist. Dabei ist die Länge des Einleitungsmittels vorzugsweise so bemessen, dass das Ende deutlich in die Lösung eintaucht, besonders bevorzugt ist, dass das Ende möglichst tief in die Lösung eintaucht.

Erfindungsgemäß ist es ausreichend, wenn der zweite Behälter ein Lumen aufweist, das es erlaubt die Mischung aus Schritt 1 portions-, vorzugsweise tropfenweise, in Gegenwart eines Inertgases in das Einleitungsmittel einzubringen bzw. zu überführen, so dass die einzelnen Portionen oder Tropfen im Wesentlichen separiert durch das Inertgas in die Lösung im Reaktor des Schrittes 2 eingedrückt oder eingedüst werden können. Es kann daher ausreichend sein, wenn der zweite Behälter nur eine Art Erweiterung im Einleitungsmittel mit Gaszuleitung darstellt.

Die folgenden Beispiele erläutern das erfindungsgemäße Verfahren und die erfindungsgemäße Anlage näher, ohne die Erfindung auf diese Beispiele zu beschränken.
Figur 1: Anlage mit Dosiervorrichtung und Vorrichtung mit Einleitungsmittel, wobei das Einleitungsmittel ein Einleitungsrohr ist.
Figur 2: Anlage umfassend einen Reaktor Schritt 1 und Dosiervorrichtung mit Regelorgan und Zuleitung 1.1 und Vorrichtung mit Einleitungsrohr in Reaktor Schritt 2.

### Beispiel 1:

### Herstellung einer 8 % wässrigen Lösung aus K-Propylsiliconat und K-Silicat

In einem 250-ml-Rundkolben mit Tropftrichter und Gasableitungsrohr wurden 100 g eines 1 : 1-Gemisches (bezogen auf die molare Zusammensetzung) aus Propyltrichlorsilan und Tetrachlorsilan vorgelegt. Unter kräftigem Rühren wurden langsam 10 g Ethanol zugegeben. Die Temperatur stieg bei der Zugabe an, durfte aber nicht über 60 °C steigen. Bei Bedarf wurde gegengekühlt. Nach vollständiger Zugabe des Ethanols wurde für weitere 10 min gerührt und die erhaltene Mischung wurde direkt weiterverwendet.

In einem 500-ml-Rundkolben (5) mit Gaseinleitungsrohr (2.2) ohne Fritte wurden 300 g 40 % wässrige KOH vorgelegt. In einem Tropftrichter (1) mit N₂-Anschluss (1.4) wurden 50 g des Produktes aus dem ersten Reaktionsschritt vorgelegt. Das Produkt wurde nun langsam, unter kräftigem Rühren, über das Gaseinleitungsrohr (2.2) zur wässrigen Lauge (4) gegeben. Dabei wird der N₂-Strom so geteilt, dass ein Teil auf den Inhalt des Tropftrichters (1) drückt, der andere Teil die Öffnung des Tropftrichters (1.1 in 3 der Vorrichtung 2) umspült. Beide Ströme werden im Gaseinleitungsrohr (2.2) wieder vereinigt. Während der Zugabe stieg die Temperatur an. Sollte sie über 60 °C ansteigen, sollte gegengekühlt werden. Nach vollständiger Zugabe wurde weitergerührt bis eine klare Lösung entstand.
²⁹Si-NMR (100 MHz, D₂O): δ = -46 (CH₃CH₂CH₂Si(O⁻)₃), -71 (Si(O⁻)₄).

### Beispiel 2:

### Herstellung einer 11 % wässrigen Lösung aus K-Propylsiliconat und K-Silicat

In einem 250-ml-Rundkolben mit Tropftrichter und Gasableitungsrohr wurden 100 g eines 1 : 1-Gemisches (bezogen auf die molare Zusammensetzung) aus Propyltrichlorsilan und Tetrachlorsilan vorgelegt. Unter kräftigem Rühren wurden langsam 10 g Ethanol zugegeben. Die Temperatur stieg bei der Zugabe an, sollte aber nicht über 60 °C ansteigen. Bei Bedarf wurde gegengekühlt. Nachvollständiger Zugabe des Ethanols wurde für weitere 10 min gerührt und die erhaltene Mischung direkt weiterverwendet.

In einem 500-ml-Rundkolben (5) mit Gaseinleitungsrohr (2.2) ohne Fritte wurden 440 g 50 % wässrige KOH vorgelegt. In einem Tropftrichter (1) mit N₂-Anschluss (1.4) wurden 100 g des Produktes aus dem ersten Reaktionsschritt vorgelegt. Das Produkt wurde nun langsam, unter kräftigem Rühren, über das Gaseinleitungsrohr (1.4) zur wässrigen Lauge (4) gegeben. Dabei wurde der N₂-Strom so geteilt, dass ein Teil (1.4) auf den Inhalt des Tropftrichters (1) drückt, der andere Teil (2.5) die Öffnung des Tropftrichters (1.1 in 3 der Vorrichtung 2) umspült. Beide Ströme wurden im Gaseinleitungsrohr (2.2) wieder vereinigt. Während der Zugabe stieg die Temperatur an. Lag sie über 60 °C, wurde gegengekühlt. Nach vollständiger Zugabe wurde weitergerührt bis eine klare Lösung entstand.
²⁹Si-NMR (100 MHz, D₂O): δ = -45,6 (CH₃CH₂CH₂Si(O⁻)₃), -70,5 (Si(O⁻)₄).

### 3. Vergleichsbeispiel:

### Herstellung einer 8 % wässrigen Lösung aus K-Propylsiliconat und K-Silicat

In einem 250-ml-Rundkolben mit Tropftrichter und Gasableitungsrohr wurden 100 g eines 1 : 1-Gemisches (bezogen auf die molare Zusammensetzung) aus Propyltrichlorsilan und Tetrachlorsilan vorgelegt. Unter kräftigem Rühren wurden langsam 10 g Ethanol zugegeben. Die Temperatur stieg bei der Zugabe an. Sie sollte aber nicht über 60 °C steigen. Bei Bedarf wurde gegengekühlt. Nach vollständiger Zugabe des Ethanols wurde für weitere 10 min gerührt und die erhaltene Mischung direkt weiterverwendet.

In einem 500-ml-Rundkolben mit Gaseinleitungsrohr (2.2) ohne Fritte wurden 300 g 40 % wässrige KOH vorgelegt. In einem Tropftrichter (1) ohne N₂-Anschluss wurden 50 g des Produktes aus dem ersten Reaktionsschritt vorgelegt. Das Produkt wurde nun langsam, unter kräftigem Rühren, über das Gaseinleitungsrohr (2.2) zur wässrigen Lauge gegeben. Die Zugabe musste bereits nach wenigen Millilitern unterbrochen werden, da die Zuleitungen verstopften.

### 4. Vergleichsbeispiel:

### Methylsiliconat-Lösung 34-%ig.

### Ausprüfungen der Reaktionsprodukte aus Beispiel 1

Die Reaktionsprodukte aus Beispiel 1 wurden ohne weitere Reinigung oder Verdünnung verwendet. Massive Ziegelwürfel aus Poroton Vollziegel mit einer Kantenlänge von 50 mm sowie Betonwürfel aus Beton nach DIN EN 1045 mit einer Kantenlänge von 50 mm wurden bei 25 °C und 60 % Feuchte für 24 h konditioniert und anschließend 5 s in die Lösungen aus Beispiele 1 bzw. 2 getaucht. Anhaftende Feuchtigkeit wurde durch leichtes Abtupfen der Oberflächen mit einem Zellstofftuch entfernt. Anschließend wurden die behandelten Probekörper bei 25 °C und 60 % Feuchte für 14 Tage so gelagert, dass Luft von allen Seiten hinzutreten konnte. An diesen Probekörpern wurde die Reduktion der Wasseraufnahme in Anlehnung an DIN EN 13580 bestimmt.

Dabei wurde die prozentuale Reduktion durch Vergleich mit einem unbehandelten Probekörper gleicher Art berechnet (Tabelle 1 a). Die folgende Tabelle 1 a zeigt Verbrauchsmengen sowie Reduktion der Wasseraufnahme unterschiedlicher Materialien.

**Tabelle 1 a: Reduktion der Wasseraufnahme von Ziegel und Beton.**

| Untergrund | Auftragsmenge [g/m²] | Reduktion der Wasseraufnahme [%] |
|---|---|---|
| Ziegel | 313 | 89,2 |
| Beton | 167 | 82,5 |

Außerdem wurden Ziegel als Probenkörper mit einer Lösung aus Beispiel 1 sowie mit einer Methylsiliconatlösung (4. Vergleichsbeispiel) wie vorstehend beschrieben behandelt. Anschließend erfolgte eine Lagerung in KOH. Die folgende Tabelle 1a zeigt Verbrauchsmengen sowie Reduktion der Wasseraufnahme unterschiedlicher Materialien.

**Tabelle 1b: Reduktion der Wasseraufnahme von Ziegel Bsp. 1 und Methylsiliconat.**

| auf Ziegel | Auftragsmenge [g/m²] | Reduktion der Wasseraufnahme [%] | Reduktion der Wasseraufnahme [%] nach Lagerung in KOH¹ | Eindringtiefe [mm] |
|---|---|---|---|---|
| Bsp. 1 | 313 | 89,2 | 68,1 | 1,5-2,6 |
| 4. Vergleichsbeispiel | 307 | 84 | 7,1 | 2-2,5 |

| | | | | |
|---|---|---|---|---|
| ¹ Lagerung in KOH, 24 h in Analogie zu DIN EN 13580. | | | | |

### Ausprüfung der Reaktionsprodukte aus Beispiel 2

Es wurden zylinderförmige Gipsprobekörper aus einem handelsüblichen Gips der Firma Knauf mit einem Wasser: Gips Verhältnis von 0,5 hergestellt. Zur wässrigen Gipsslurry wurde 3 w% (rel. zum Gipspulver) des Reaktionsproduktes aus Beispiel 2 gegeben. Die Gipsprobekörper hatten einen Durchmesser von 50 mm und eine Höhe von 25 mm und wurden in PE-Schalungen gegossen. Die Gipspropekörper wurden für 28 Tage bei 25 °C und 60 % rel. Feuchte ausgehärtet, nach 2 Tagen bei diesen Bedingungen wurde entschalt, anschließend wurde so gelagert, dass Luft von allen Seiten frei zirkulieren konnte. Die Wasseraufnahme wurde in Anlehnung an DIN EN 520 bestimmt, die Ergebnisse sind der nachfolgenden Tabelle 2 zu entnehmen.

**Tabelle 2: Wasseraufnahme von Gipsprobekörper.**

| Probekörper | Wasseraufnahme [%] |
|---|---|
| unbehandelte Referenz | 23,8 |
| Gipsprobekörper + 3 w% Produkt aus Beispiel 2 | 11,8 ( Klasse H3) |

### Ausführungsbeispiel Anlage:

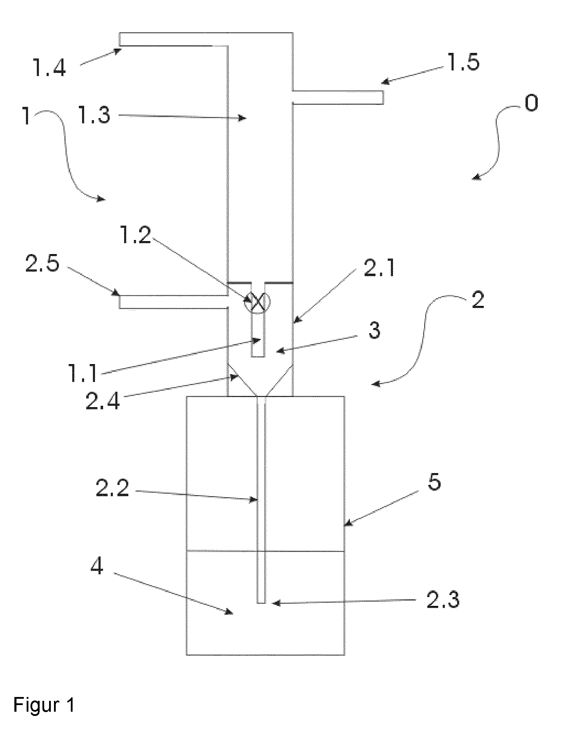

Figur 1 zeigt eine erfindungsgemäße Anlage 0 zur Durchführung des erfindungsgemäßen Verfahrens, mit einer Dosiereinrichtung 1 und einem Regelorgan 1.2, das die portionsweise Dosierung der Mischung aus Schritt 1 in das Einleitungsmittel 2.2 erlaubt.

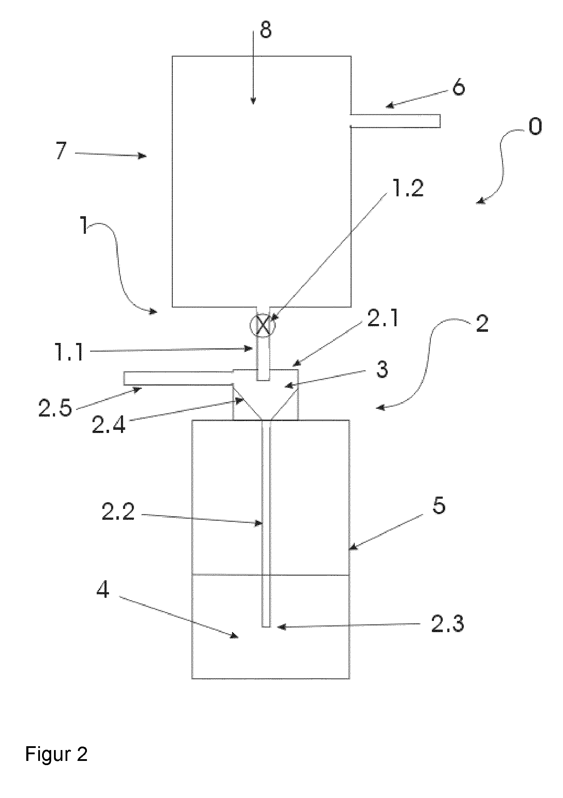

Die Dosiervorrichtung 1 kann ebenfalls umfassen a) einen ersten Behälter 1.3 mit einer Gaszuleitung 1.4 und/oder einer Zuleitung (1.5, wie in Figur 1 dargestellt oder b) die Anlage umfasst eine Dosiervorrichtung 2 (Figur 2) mit Regelorgan 1.2 und umfasste einen Reaktor Schritt 1 (7) mit einer Zuleitung für Edukte 8 und gegebenenfalls einer Zuleitung für Inertgas 6. Die Dosiereinrichtung 1 ist mit einer Vorrichtung 2 verbunden, die ein Einleitungsmittel 2.2 aufweist, das üblicherweise ein Einleitungsrohr 2.2 oder ein Einleitungsschlauch 2.2 sein kann. Ferner weist die Vorrichtung 2 einen sogenannten zweiten Behälter 2.1 auf, dessen Zweck, der einer Art Mischkammer von Inertgas und Portionen oder Tropfen der Mischung aus Schritt 1 ist. Dazu hat der zweite Behälter 2.1 ein Lumen 3 und eine Gaszuleitung 2.5 und ist mit dem Einleitungsmittel 2.2, insbesondere Einleitungsrohr oder -schlauch 2.2 verbunden, wobei das Einleitungsmittel mit seinem Ende 2.3 in einen Reaktor Schritt 2 (5) eingeführt ist. Dabei ist die Länge des Einleitungsmittels so bemessen, dass das Ende 2.3 in die Lösung 4 eintaucht. Vorzugsweise ist das Ende möglichst tief der Lösung 4 eingetaucht.

In den Figuren 1 und 2 ist schematisch dargestellt, dass es bei einer erfindungsgemäßen Anlage 0 darauf ankommt, dass sie dazu geeignet ist, die Mischung aus Schritt 1 mit einem Regelorgan 1.2, das gegebenenfalls mit dem ersten Behälter 1.3 oder dem Reaktor Schritt 1 (7) verbunden ist, vorzugsweise mittels einer Zuleitung 1.1, definiert in das Lumen 3 des zweiten Behälters 2.1 zu überführen. Dort wird die Mischung aus Schritt 1 mit Inertgas überlagert und die einzelnen Tropfen werden quasi vom Inertgas separiert. Es ist daher wichtig, dass das Einleitungsmittel vorzugsweise einen Durchmesser hat oder derart beschaffen ist, dass ein Ineinanderlaufen der Portionen oder Tropfen in dem Einleitungsmittel selbst bei zügiger Dosierung verhindert wird. Ferner ist eine Gaszuleitung 2.5 mit dem Behälter 2.1 verbunden. Der Behälter 2.1 kann über eine Art Sammelvorrichtung 2.4 bspw. in Art eines Trichters, verfügen, die sich oberhalb des Einleitungsmittels 2.2 befindet. Das Einleitungsmittel ist vorzugsweise ein starres Rohr oder eine Kapillare 2.2, deren unteres Ende 2.3 so weit in den Reaktor 5 eingeführt ist, dass das Ende 2.3 bei Durchführung des Verfahrens in die Lösung 4 eingetaucht ist. Dabei kann zweite Behälter 2.1 ein Lumen 3 aufweisen, das es erlaubt die Mischung aus Schritt 1 bspw. tropfenweise in Gegenwart von Stickstoff in das Einleitungsrohr separiert einzubringen und unmittelbar in die Lösung im Reaktor des Schrittes 2 einzudüsen. Es kann daher ausreichend sein, wenn der zweite Behälter 2.1 eine Art Erweiterung im Einleitungsmittel 2.2 mit Gaszuleitung 2.5 darstellt.

### Bezugszeichenliste:

- 0: Anlage
- 1: Dosiervorrichtung
- 1.1: Zuleitung
- 1.2: Regelorgan
- 1.3: erster Behälter
- 1.4: Gaszuleitung
- 1.5: Zuleitung
- 2: Vorrichtung mit Einleitungsmittel
- 2.1: zweiter Behälter
- 2.2: Einleitungsmittel, insbesondere Einleitungsrohr/-schlauch
- 2.3: Ende Einleitungsmittel
- 2.4: Sammelvorrichtung
- 2.5: Gaszuleitung
- 3: Lumen
- 4: Lösung
- 5: Reaktor Schritt 2
- 6: Zuleitung (Inertgas)
- 7: Reaktor Schritt 1
- 8: Zuleitung (Edukte)

## Patentansprüche

1. Verfahren zur Herstellung einer Lösung umfassend organofunktionelle Alkali-Siliconate, Silikate und gegebenenfalls deren Co-Kondensationsprodukte, umfassend die Schritte
1) Herstellen einer Mischung umfassend mindestens ein organofunktionelles Silan der allgemeinen Formel I, mindestens ein Halogensilan der Formel II und Alkohol, indem
- mindestens ein organofunktionelles Silan der allgemeinen Formel I
(R¹)ₓSiHal_{(y-x)} (I)
mit R¹ unabhängig ein organofunktioneller Rest, mit hydrolysierbarem Rest Hal, der unabhängig Chlor oder Brom ist, x ist gleich 1 oder 2 und y gleich 4, und
- mindestens ein Halogensilan der Formel II
Si(Hal)₄ (II)
mit hydrolysierbarem Rest Hal, der unabhängig gleich Chlor oder Brom ist, und mindestens ein Alkohol und gegebenenfalls Wasser umgesetzt werden,
2) Einleiten der umgesetzten Mischung aus Schritt 1 in Gegenwart von Inertgas in eine wässerige Alkalihydroxid Lösung, wobei das Inertgas im Verfahren so zugeführt wird, dass es die Mischung aus Schritt 1 portionsweise unmittelbar in die wässrige alkalische Lösung einbringt.

2. Verfahren nach Anspruch 1,
**dadurch gekennzeichnet,**
**dass** die Mischung in Schritt 1 und/oder die Lösung im Schritt 2 intensiv gerührt werden.

3. Verfahren nach Anspruch 1 oder 2 ,
**dadurch gekennzeichnet,**
**dass** der organofunktionelle Rest R¹ jeweils unabhängig 1 bis 18 C-Atome umfasst, insbesondere entspricht er jeweils unabhängig einem linearen, verzweigten oder cyclischen Alkyl-Rest mit 1 bis 18 C-Atomen, einem Alkylen-Rest mit 1 bis 18 C-Atomen, einem Aryl-Rest mit 6, 10, 12 oder 13 C-Atomen oder einem Alkylaryl- oder Arylalkyl-Rest mit 7 bis 18 C-Atomen, bevorzugt ist R¹ ein Alkylrest mit 2 bis 16 C-Atomen, besonders bevorzugt ist R¹ ein Alkylrest mit 3 bis 16 C-Atomen, besser mit 3 bis 5 C-Atomen oder 6 bis 16 C-Atomen.

4. Verfahren nach einem der Ansprüche 1 bis 3,
**dadurch gekennzeichnet,**
**dass** in Schritt 2 eine Lösung umfassend organofunktionelle Alkali-Siliconate, Silicate und gegebenenfalls deren Co-Kondensationsprodukte erhalten wird, wobei die organofunktionellen-Gruppen des Siliconats unabhängig R¹ entsprechen, wie definiert.

5. Verfahren nach einem der Ansprüche 1 bis 4,
**dadurch gekennzeichnet,**
**dass** das organofunktionelle Silan der allgemeinen Formel I und das Halogensilan der Formel II in Schritt 1 in einem molaren Verhältnis von 0,5 : 10 bis 10 : 0,5 eingesetzt werden.

6. Verfahren nach einem der Ansprüche 1 bis 5,
**dadurch gekennzeichnet,**
**dass** der Alkohol in Verhältnis von 1 bis 100 mol-% in Bezug auf die hydrolysierbaren Reste in Mol zu gesetzt wird.

7. Verfahren nach einem der Ansprüche 1 bis 6,
**dadurch gekennzeichnet,**
**dass** die Mischung aus Schritt 1 unmittelbar in Schritt 2 in eine wässrige, alkalische Lösung eingeleitet und zu einer Lösung umfassend organofunktionelle Siliconate, Silicate und gegebenenfalls deren Co-Kondensationsprodukte umgesetzt wird.

8. Verfahren nach einem der Ansprüche 1 bis 7,
**dadurch gekennzeichnet,**
**dass** die Temperatur im Schritt 1 und/oder im Schritt 2 80 °C, vorzugsweise 60 °C nicht übersteigt.

9. Verfahren nach einem der Ansprüche 1 bis 8,
**dadurch gekennzeichnet,**
**dass** der Alkohol aus der Lösung umfassend organofunktionelle Alkali-Siliconate, Silicate und gegebenenfalls deren Co-Kondensationsprodukte entfernt wird.

10. Verfahren nach einem der Ansprüche 1 bis 9,
**dadurch gekennzeichnet,**
**dass** der Anteil an organofunktionellen Siliconat, Silikat und deren Co-Kondensationsprodukten in der Lösung zwischen 1 bis 40 Gew.-%, bezogen auf das Gesamtgewicht der Lösung, liegt, wobei gegebenenfalls der Gehalt durch Zugabe von Wasser eingestellt wird.

11. Verfahren nach einem der Ansprüche 1 bis 10,
**dadurch gekennzeichnet,**
**dass** der Alkohol umfasst Ethanol, Methanol, Propanol, wie iso-Propanol oder n-Propanol, oder Mischungen umfassend mindestens zwei der Alkohole, wobei der Alkohol-Gehalt in der Lösung vorzugsweise zwischen 1 Gew.-ppm und 25 Gew.-%, bezogen auf das Gesamtgewicht der Lösung, liegt.

12. Verfahren nach einem der Ansprüche 1 bis 11,
**dadurch gekennzeichnet,**
**dass** das Inertgas Stickstoff und/oder Argon umfasst
oder weitere, nicht mit den Mischungen und/oder Lösungen reagierende Gase.

13. Verfahren nach einem der Ansprüche 1 bis 12,
**dadurch gekennzeichnet,**
- **dass** die Mischung aus Schritt 1 für die Durchführung von Schritt 2 mittels einer Dosiervorrichtung (1) gegebenenfalls in Gegenwart von Inertgas, portionsweise, insbesondere tropfenweise, einer Vorrichtung (2) mit Einleitungsmittel (2.2) zugeführt wird, die mit Inertgas (3) überlagert ist, und dessen Ende (2.3) in die alkalische Lösung eingetaucht ist oder
- **dass** die Mischung aus Schritt 1 für die Durchführung von Schritt 2 in eine Dosiervorrichtung (1) überführt wird und mit Inertgas überlagert wird, aus der Dosiervorrichtung (1) wird die Mischung aus Schritt 1 portionsweise, insbesondere tropfenweise, in eine Vorrichtung (2) mit Einleitungsmittel (2.2) gegeben, die mit Inertgas (3) überlagert ist, und dessen Ende (2.3) in die alkalische Lösung eingetaucht ist.

14. Verfahren nach einem der Ansprüche 1 bis 13,
**dadurch gekennzeichnet,**
**dass** ein Inertgasstrom geteilt wird und ein Teil des Inertgases in die Dosiervorrichtung (1; 1.4) und ein Teil des Inertgases in die Vorrichtung (2, 2.5) mit Einleitungsmittel überführt wird.

15. Verfahren nach einem der Ansprüche 1 bis 14,
**dadurch gekennzeichnet,**
**dass** die Mischung aus Schritt 1 mittels einer Dosiervorrichtung (1) portionsweise in eine Vorrichtung mit Einleitungsmittel überführt wird und dort mittels des Inertgases durch das Einleitungsmittel in die alkalische Lösung gedrückt wird, insbesondere jeweils tropfenweise, vorzugsweise wird die Mischung aus Schritt 1 durch das Inertgas in die Lösung eingedüst, besonders vorzugsweise wird die Mischung aus Schritt 1 durch das Inertgas unter Druck in die Lösung eingedüst.

16. Lösung erhältlich nach einem Verfahren gemäß einem der Ansprüche 1 bis 15,
**dadurch gekennzeichnet,**
**dass** sie gegebenenfalls Co-Kondensationsprodukte von organofunktionellen Alkalisiliconaten mit Silicaten und/oder einen definierten Alkoholgehalt aufweist.

17. Verwendung einer Lösung erhalten nach einem der Ansprüche 1 bis 15 oder einer Lösung nach Anspruch 16 zur Hydrophobierung von mineralischen Baustoffen, insbesondere zur Hydrophobierung der Oberfläche mineralischer Baustoffe oder zur Hydrophobierung von mineralischen Baustoffen in der Masse, wobei die mineralischen Baustoffe Beton, Estrich, Gips, Putz, Mörtel, Lehm, Ton, Ziegel, Sand, Keramik, Terracotta, Kalksandstein Naturstein, wie Sandstein, Marmor, Granit umfassen.

18. Anlage (0) zur Durchführung eines Verfahren nach einem der Ansprüche 1 bis 15, **dadurch gekennzeichnet,**
**dass** sie eine Dosiereinrichtung (1) umfassend ein Regelorgan (1.2) aufweist, und
a) die Dosiereinrichtung (1) umfasst einen ersten Behälter (1.3) mit einer Gaszuleitung (1.4) und/oder einer Zuleitung (1.5) oder
b) die Anlage (0) umfasst eine Dosiereinrichtung (1) umfassend ein Regelorgan (1.2), einen Reaktor Schritt 1 (7) mit einer Zuleitung für Edukte (8) und gegebenenfalls einer Zuleitung für Inertgas (6),
wobei die Dosiereinrichtung (1) mit einer Vorrichtung (2) verbunden ist, die ein Einleitungsmittel (2.2) und einen zweiten Behälter (2.1) aufweist, wobei der zweite Behälter (2.1) ein Lumen (3) und eine Gaszuleitung (2.5) aufweist und mit dem Einleitungsmittel (2.2) verbunden ist, wobei das Einleitungsmittel (2.2) mit seinem Ende (2.3) in einen Reaktor Schritt 2 (5) eingeführt ist.

19. Anlage (0) nach Anspruch 18,
**dadurch gekennzeichnet,**
**dass** die Mischung aus Schritt 1 mit dem Regelorgan (1.2), gegebenenfalls aus dem ersten Behälter (1.3) oder dem Reaktor Schritt 1 (7), definiert in das Lumen (3) des zweiten Behälters (2.1) überführbar ist, und mittels des über die Gaszuleitung (2.5) zugeführten Inertgases über das Einleitungsmittel (2.2) dessen Ende (2.3) in die Lösung (4) im Reaktor Schritt 2 (5) eintaucht, in die Lösung einleitbar ist, insbesondere in die Lösung (4) eindüsbar ist.

## Claims

1. Method of preparing a solution comprising organofunctional alkali siliconates, silicates and optionally co-condensation products thereof, comprising the steps of:
1) preparing a mixture comprising at least one organofunctional silane of general formula I, at least one halosilane of formula II and alcohol, by reacting
- at least one organofunctional silane of general formula I
(R¹)ₓSiHal_{(y-x}) (I)
with R¹ independently an organofunctional radical, with hydrolysable residue Hal, which is independently chlorine or bromine, x is 1 or 2 and y is 4, and
- at least one halosilane of formula II
Si(Hal)₄ (II)
with hydrolysable residue Hal, which is independently chlorine or bromine, and at least one alcohol and optionally water,
2) introducing the reacted mixture from step 1 in the presence of inert gas into an aqueous alkali hydroxide solution, wherein the inert gas is supplied in the process so that it introduces the mixture from step 1 a little at a time directly into the aqueous alkaline solution.

2. Method according to Claim 1, **characterized in that** the mixture in step 1 and/or the solution in step 2 are stirred vigorously.

3. Method according to Claim 1 or 2, **characterized in that** the organofunctional radical R¹ in each case independently comprises 1 to 18 carbon atoms, and especially in each case independently corresponds to a linear, branched or cyclic alkyl radical having 1 to 18 carbon atoms, an alkylene radical having 1 to 18 carbon atoms, an aryl radical having 6, 10, 12 or 13 carbon atoms, or an alkylaryl or arylalkyl radical having 7 to 18 carbon atoms, R¹ preferably being an alkyl radical having 2 to 16 carbon atoms, R¹ more preferably being an alkyl radical having 3 to 16 carbon atoms, better having 3 to 5 carbon atoms or 6 to 16 carbon atoms.

4. Method according to one of Claims 1 to 3, **characterized in that** a solution comprising organofunctional alkali siliconates, silicates and optionally co-condensation products thereof is obtained in step 2, where the organofunctional groups of the silicate independently correspond to R¹, as defined.

5. Method according to one of Claims 1 to 4, **characterized in that** the organofunctional silane of general formula I and the halosilane of formula II are used in step 1 in a molar ratio from 0.5 : 10 to 10 : 0.5.

6. Method according to one of Claims 1 to 5, **characterized in that** the alcohol is added in a ratio from 1 to 100 mol.% relative to the hydrolysable residues in mol.

7. Method according to one of Claims 1 to 6, **characterized in that** the mixture from step 1 is introduced immediately in step 2 into an aqueous, alkaline solution and is reacted to a solution comprising organofunctional siliconates, silicates and optionally co-condensation products thereof.

8. Method according to one of Claims 1 to 7, **characterized in that** the temperature in step 1 and/or in step 2 does not exceed 80°C, preferably 60°C.

9. Method according to one of Claims 1 to 8, characterixed in that the alcohol is removed from the solution comprising organofunctional alkali siliconates, silicates and optionally co-condensation products thereof.

10. Method according to one of Claims 1 to 9, **characterized in that** the proportion of organofunctional siliconate, silicate and co-condensation products thereof in the solution is between 1 and 40 wt.%, relative to the total weight of the solution, wherein the content is adjusted if necessary by adding water.

11. Method according to one of Claims 1 to 10, **characterized in that** the alcohol comprises ethanol, methanol, propanol, such as isopropanol or n-propanol, or mixtures comprising at least two of the alcohols, where the alcohol content in the solution is preferably between 1 ppm by weight and 25% by weight, based on the total weight of the solution.

12. Method according to one of Claims 1 to 11, **characterized in that** the inert gas comprises nitrogen and/or argon or further gases which do not react with the mixtures and/or solutions.

13. Method according to one of Claims 1 to 12, **characterized in that**
- the mixture from step 1 for the performance of step 2 is supplied a little at a time, especially dropwise, by means of a metering device (1), optionally in the presence of inert gas, to a device (2) which has delivery means (2.2) and is blanketed with inert gas (3), and the end of which (2.3) is immersed into the alkaline solution, or
- the mixture from step 1 for the performance of step 2 is transferred into a metering device (1) and is blanketed with inert gas, the mixture from step 1 is introduced a little at a time, especially dropwise, from the metering device (1) to a device (2) which has delivery means (2.2) and is blanketed with inert gas (3), and the end of which (2.3) is immersed into the alkaline solution.

14. Method according to one of Claims 1 to 13, **characterized in that** an inert gas stream is divided and a portion of the inert gas is transferred into the metering device (1; 1.4) and a portion of the inert gas into the device (2, 2.5) with delivery means.

15. Method according to one of Claims 1 to 14, **characterized in that** the mixture from step 1 is transferred by means of a metering device (1) a little at a time into a device with a delivery means and there it is forced by means of the inert gas through the delivery means into the alkaline solution, in particular in each case dropwise, preferably the mixture from step 1 is injected by the inert gas into the solution, especially preferably the mixture from step 1 is injected by the inert gas under pressure into the solution.

16. Solution obtainable by a method according to one of Claims 1 to 15, **characterized in that** it optionally has co-condensation products of organofunctional alkali siliconates with silicates and/or a defined alcohol content.

17. Use of a solution obtained according to one of Claims 1 to 15 or of a solution according to Claim 16 for the hydrophobization of mineral building materials, in particular for the hydrophobization of the surface of mineral building materials or for the hydrophobization of mineral building materials in the bulk, wherein the mineral building materials comprise concrete, screed, gypsum, plaster, mortar, loam, clay, brick, sand, ceramic, terracotta, lime sandstone, natural stone, such as sandstone, marble, granite.

18. Plant (0) for performance of a method according to one of Claims 1 to 15, **characterized in that** it has a metering device (1) comprising a control device (1.2), and
a) the metering device (1) comprises a first vessel (1.3) with a gas feed pipe (1.4) and/or a feed pipe (1.5) or
b) the plant (0) comprises a metering device (1) comprising a control device (1.2), a step 1 reactor (7) with a feed pipe for educts (8) and optionally a feed pipe for inert gas (6),
the metering device (1) being connected to a device (2) which has a delivery means (2.2) and a second vessel (2.1), the second vessel (2.1) having a lumen (3) and a gas feed pipe (2.5) and being connected to the delivery means (2.2), the delivery means (2.2) being introduced by its end (2.3) into a step 2 reactor (5).

19. Plant (0) according to Claim 18, **characterized in that** the mixture from step 1 can be transferred with the control device (1.2), either from the first vessel (1.3) or the step 1 reactor (7), in a defined manner into the lumen (3) of the second vessel (2.1), and can be introduced into the solution via the delivery means (2.2), the end of which (2.3) is immersed into the solution (4) in the step 2 reactor (5) by means of the inert gas supplied via the gas feed pipe (2.5), and more particularly can be injected into the solution (4).

## Revendications

1. Procédé pour la préparation d'une solution comprenant des siliconates organofonctionnels de métal alcalin, des silicates et le cas échéant leurs produits de cocondensation, comprenant les étapes consistant à
1) préparer un mélange comprenant au moins un silane organofonctionnel de formule générale I, au moins un halogénosilane de formule II et un alcool, en ce qu'on transforme
- au moins un silane organofonctionnel de formule générale I
(R¹)ₓSiHal_{(y-x}) (I)
dans laquelle R¹ représente, indépendamment, un radical organofonctionnel, Hal représente un radical hydrolysable qui représente, indépendamment, chlore ou brome, x vaut 1 ou 2 et y vaut 4, et
- au moins un halogénosilane de formule II
Si(Hal)₄ (II)
dans laquelle Hal représente un radical hydrolysable qui représente, indépendamment, chlore ou brome, avec au moins un alcool et le cas échéant de l'eau
2) guider le mélange transformé de l'étape 1 en présence d'un gaz inerte dans une solution aqueuse d'hydroxyde de métal alcalin, le gaz inerte étant alimenté dans le procédé de manière telle qu'il introduit le mélange de l'étape 1 par portions directement dans la solution alcaline aqueuse.

2. Procédé selon la revendication 1, **caractérisé en ce que** le mélange dans l'étape 1 et/ou la solution dans l'étape 2 sont agités de manière intensive.

3. Procédé selon la revendication 1 ou 2, **caractérisé en ce que** le radical organofonctionnel R¹ comprend à chaque fois, indépendamment, 1 à 18 atomes de carbone, en particulier il correspond à chaque fois, indépendamment, à un radical alkyle linéaire, ramifié ou cyclique comprenant 1 à 18 atomes de carbone, un radical alcène comprenant 1 à 18 atomes de carbone, un radical aryle comprenant 6, 10, 12 ou 13 atomes de carbone ou un radical alkylaryle ou arylalkyle comprenant 7 à 18 atomes de carbone, de préférence R¹ représente un radical alkyle comprenant 2 à 16 atomes de carbone, de manière particulièrement préférée R¹ représente un alkyle comprenant 3 à 16 atomes de carbone, plus préférablement 3 à 5 atomes de carbone ou 6 à 16 atomes de carbone.

4. Procédé selon l'une quelconque des revendications 1 à 3, **caractérisé en ce qu'**on obtient, dans l'étape 2, une solution comprenant des siliconates organofonctionnels de métal alcalin, des silicates et le cas échéant leurs produits de cocondensation, les groupes organofonctionnels du siliconate correspondant, indépendamment, à R¹ tel que défini.

5. Procédé selon l'une quelconque des revendications 1 à 4, **caractérisé en ce que** le silane organofonctionnel de la formule générale I et l'halogénosilane de formule II dans l'étape 1 sont utilisés dans un rapport molaire de 0,5:10 à 10:0,5.

6. Procédé selon l'une quelconque des revendications 1 à 5, **caractérisé en ce que** l'alcool est ajouté dans un rapport de 1 à 100% en mole par rapport aux radicaux hydrolysables en moles.

7. Procédé selon l'une quelconque des revendications 1 à 6, **caractérisé en ce que** le mélange de l'étape 1 est guidé directement dans l'étape 2 dans une solution alcaline aqueuse et est transformé en une solution comprenant des siliconates organofonctionnels, des silicates et le cas échéant leurs produits de cocondensation.

8. Procédé selon l'une quelconque des revendications 1 à 7, **caractérisé en ce que** la température dans l'étape 1 et/ou dans l'étape 2 ne dépasse pas 80°C, de préférence pas 60°C.

9. Procédé selon l'une quelconque des revendications 1 à 8, **caractérisé en ce que** l'alcool est éliminé de la solution comprenant des siliconates organofonctionnels de métal alcalin, des silicates et le cas échéant leurs produits de cocondensation.

10. Procédé selon l'une quelconque des revendications 1 à 9, **caractérisé en ce que** la proportion de siliconate organofonctionnel, de silicate et de leurs produits de cocondensation dans la solution se situe entre 1 et 40% en poids, par rapport au poids total de la solution, la teneur étant le cas échéant réglée par addition d'eau.

11. Procédé selon l'une quelconque des revendications 1 à 10, **caractérisé en ce que** l'alcool comprend l'éthanol, le méthanol, le propanol, tel que l'isopropanol ou le n-propanol, ou des mélanges comprenant au moins deux des alcools, la teneur en alcool dans la solution se situant de préférence entre 1 ppm en poids et 25% en poids, par rapport au poids total de la solution.

12. Procédé selon l'une quelconque des revendications 1 à 11, **caractérisé en ce que** le gaz inerte comprend l'azote et/ou l'argon ou d'autres gaz ne réagissant pas avec les mélanges et/ou les solutions.

13. Procédé selon l'une quelconque des revendications 1 à 12, **caractérisé en ce que** le mélange de l'étape 1 est alimenté, pour la réalisation de l'étape 2, au moyen d'un dispositif de dosage (1), le cas échéant en présence d'un gaz inerte, par portions, de préférence goutte à goutte, dans un dispositif (2) présentant un moyen d'introduction (2.2), qui est couvert d'un gaz inerte (3) et dont l'extrémité (2.3) est plongée dans la solution alcaline ou **en ce que** le mélange de l'étape 1 est transféré, pour la réalisation de l'étape 2, dans un dispositif de dosage (1) et est couvert d'un gaz inerte, le mélange de l'étape 1 est introduit, à partir du dispositif de dosage (1), par portions, de préférence goutte à goutte, dans un dispositif (2) présentant un moyen d'introduction (2.2), qui est couvert d'un gaz inerte (3) et dont l'extrémité (2.3) est plongée dans la solution alcaline.

14. Procédé selon l'une quelconque des revendications 1 à 13, **caractérisé en ce qu'**un flux de gaz inerte est divisé et une partie du gaz inerte est introduite dans le dispositif de dosage (1 ; 1.4) et une partie du gaz inerte est introduite dans le dispositif (2 ; 2.5) présentant un moyen d'introduction.

15. Procédé selon l'une quelconque des revendications 1 à 14, **caractérisé en ce que** le mélange de l'étape 1 est transféré au moyen d'un dispositif de dosage (1), par portions, dans un dispositif présentant un moyen d'introduction et y est comprimé au moyen du gaz inerte au travers du moyen d'introduction dans la solution alcaline, en particulier à chaque fois goutte à goutte, de préférence, le mélange de l'étape 1 est injecté par le gaz inerte dans la solution, de manière particulièrement préférée le mélange de l'étape 1 est injecté par le gaz inerte sous pression dans la solution.

16. Solution pouvant être obtenue selon un procédé selon l'une quelconque des revendications 1 à 15, **caractérisée en ce qu'**elle présente le cas échéant des produits de cocondensation de siliconates organofonctionnels de métal alcalin avec des silicates et/ou une teneur définie en alcool.

17. Utilisation d'une solution obtenue selon l'une quelconque des revendications 1 à 15 ou d'une solution selon la revendication 16 pour l'hydrofugation de matériaux de construction minéraux, en particulier pour l'hydrofugation des surfaces de matériaux de construction minéraux ou pour l'hydrofugation de matériaux de construction minéraux dans la masse, les matériaux de construction minéraux comprenant le béton, les chapes, le plâtre, les enduits, les mortiers, la terre glaise, l'argile, les briques et le sable, la céramique, la terre cuite, le silico-calcaire, la pierre naturelle telle que le grès, le marbre, le granite.

18. Installation (0) pour la réalisation d'un procédé selon l'une quelconque des revendications 1 à 15, **caractérisée en ce qu'**elle présente un dispositif de dosage (1) comprenant un organe de régulation (1.2) et
a) le dispositif de dosage (1) comprend un premier récipient (1.3) présentant une conduite d'alimentation de gaz (1.4) et/ou une conduite d'alimentation (1.5) ou
b) l'installation (0) comprend un dispositif de dosage (1) comprenant un organe de régulation (1.2), une étape de réacteur 1 (7) présentant une conduite d'alimentation pour les produits de départ (8) et le cas échéant une conduite d'alimentation pour un gaz inerte (6),
le dispositif de dosage (1) étant relié à un dispositif (2) qui présente un moyen d'introduction (2.2) et un deuxième récipient (2.1), le deuxième récipient (2.1) présentant une lumière (3) et une conduite d'alimentation de gaz (2.5) et étant relié au moyen d'introduction (2.2), le moyen d'introduction (2.2) étant guidé avec son extrémité (2.3) dans une étape de réacteur 2 (5).

19. Installation (0) selon la revendication 18, **caractérisée en ce que** le mélange de l'étape 1 peut être transféré, par l'organe de régulation (1.2), le cas échéant à partir du premier récipient (1.3) ou de l'étape de réacteur 1 (7) de manière définie dans la lumière (3) du deuxième récipient (2.1) et peut être guidé, au moyen du gaz inerte alimenté via la conduite d'alimentation de gaz (2.5) via le moyen d'introduction (2.2) dont l'extrémité (2.3) plonge dans la solution (4) dans l'étape de réacteur 2 (5), dans la solution, en particulier injecté dans la solution (4).
